# EUROPÄISCHE PATENTSCHRIFT

(11) **EP 1 743 001 B1**
(45) Veröffentlichungstag und Bekanntmachung des Hinweises auf die Patenterteilung: **22.06.2011**
(21) Anmeldenummer: 05736120.6
(22) Anmeldetag: 21.04.2005
(51) Int. Cl.: C09B 67/08

(54) **VERFAHREN ZUR HERSTELLUNG POLYMERVERKAPSELTER PIGMENTE**
METHOD FOR PRODUCTION OF POLYMER-ENCAPSULATED PIGMENTS
PROCEDE POUR PRODUIRE DES PIGMENTS ENCAPSULES DANS DES POLYMERES

(30) Priorität: 28.04.2004 DE 102004020726
(43) Veröffentlichungstag der Anmeldung: 17.01.2007
(73) Patentinhaber: Clariant Produkte (Deutschland) GmbH, 65929 Frankfurt am Main (DE)
(72) Erfinder: GANSCHOW, Matthias, 65195 Wiesbaden (DE); METZ, Hans, Joachim, 64285 Darmstadt (DE); ROHR, Ulrike, 69469 Weinheim (DE); SCHWEIKART, Karl-Heinz, 65760 Eschborn (DE); LANDFESTER, Katharina, 89075 Ulm (DE)
(74) Vertreter: Hütter, Klaus
(86) Internationale Anmeldenummer: PCT/EP2005/004258
(87) Internationale Veröffentlichungsnummer: WO 2005/105931

(56) Entgegenhaltungen:
- EP-A- 1 006 161
- EP-A- 1 371 688
- WO-A-99/63006
- DE-A1- 19 821 665
- US-A- 5 863 696
- S. LELU ET. AL.: "Encapsulation of an organic phthalocyanine blue pigment into polystyrene latex particles using a miniemulsion polymerization process" POLYMER INTERNATIONAL, Bd. 52, Nr. 4, April 2003 (2003-04), Seiten 542-547, XP002339567 in der Anmeldung erwähnt
- FRANCA TIARKS, KATHARINA LANDFESTER *, MARKUS ANTONIETTI: "Encapsulation of Carbon Black by Miniemulsion Polymerization" MACROMOLECULAR CHEMISTRY AND PHYSICS, Bd. 202, Nr. 1, 25. Januar 2001 (2001-01-25), Seiten 51-60, XP002339568 Weinheim, Germany in der Anmeldung erwähnt

## Beschreibung

Die vorliegende Erfindung betrifft pigmenthaltige wässrige Polymerdispersionen feinteiliger, pigmenthaltiger Polymerisatteilchen und daraus hergestellte pigmenthaltige Polymerpulver sowie deren Einsatz als Farbmittel im Druckbereich sowie zur Verwendung in Lacken und in Kunststoffen, Ink-Jet-Tinten, Farbfiltern und Tonern.

Farbmittelhaltige Polymerdispersionen, in denen das Farbmittel ein löslicher Farbstoff ist, sind aus der EP-A-1 191 041 bekannt. Der Farbstoff ist in einer Menge von nur 0,5 bis 50 Gew.-%, bezogen auf die Polymermatrix, enthalten. Die Polymerisation erfolgt durch übliche Emulsionspolymerisation, der Farbstoff liegt im Polymer in gelöster Form vor.

In der DE-A-198 52 784 werden Mini- und Mikroemulsionen beschrieben, die zur Herstellung von Nanohybridpartikeln geeignet sind. Bei diesem Verfahren wird das Pigment im Monomer dispergiert und es entstehen Produkte mit einer sehr breiten Partikelspeziesverteilung (unterschiedliches Verhältnis Pigment zu Polymer in den einzelnen Nanohybridpartikeln).

Die EP-A-0 209 879 beschreibt ein Verfahren zur Herstellung pigmenthaltiger Polymerdispersionen durch übliche Emulsionspolymerisation. Dieses Verfahren führt ebenso zu einer breiten Partikelspeziesverteilung und zu einem beträchtlichen Anteil an leeren Tröpfchen, den sogenannten Homopolymerpartikeln, d.h. Bildung reiner Polymerpartikel ohne darin verkapselte Feststoffpartikel. Zudem können keine hohen Pigmentgehalte (> 70 %), erzielt werden, da bei hohen Pigmentanteilen die Lösungen fest werden.

In dem Artikel Macromol.Chem.Phys. 2001, 202, 51-60 wird die Verkapselung von Ruß durch ein Miniemulsionspolymerisationsverfahren beschrieben. Ruß ist ein sehr unpolares Material, welches mit ebenfalls unpolaren Monomeren verkapselt wird. Eine Verkapselung polarer organischer Materialien, wie organische Pigmente, mit gerichteten Wechselwirkungen, war nach dieser Methode nicht zu erwarten.

In dem Artikel Polymer International 2003, 52, 542-547 wird die Styrolverkapselung von Phthalocyaninen durch ein Miniemulsionspolymerisationsverfahren beschrieben. Auch dieses Verfahren führt zu Materialien mit einer sehr breiten Partikelspeziesverteilung, da das Pigment im Monomer dispergiert wird.

Es bestand die Aufgabe, ein Verfahren zur Herstellung einer wässrigen pigmenthaltigen Polymerdispersion bereitzustellen, das einen möglichst geringen Anteil an leeren Tröpfchen produziert und einen weit variierenden Pigmentanteil zulässt, aber trotzdem Teilchen mit einer engen Partikelspeziesverteilung produziert.

Es wurde gefunden, dass die Kombination der nachstehenden Verfahrensschritte überraschenderweise die gestellte Aufgabe löst.

Gegenstand der Erfindung ist ein Verfahren zur Herstellung einer wässrigen Dispersion polymerverkapselter Pigmente, dadurch gekennzeichnet, dass man
(a) eine wässrige Pigmentdispersion, enthaltend mindestens ein organisches Pigment P aus der Gruppe der Azo-, Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron-, Perylen-, Perinon-, Pyranthtron-, Diketopyrrolopyrrol-, Isoviolanthron- und Azomethinpigmente, mindestens ein Tensid T, und Wasser, bereitstellt;
(b) eine durch eine hydrophobe organische Verbindung, die eine Wasserlöslichkeit bei 20°C von höchstens 5x 10⁻⁵ g/l aufweist, stabilisierte Monomer-Miniemulsion aus mindestens einem polymerisierbaren Monomer M und mindestens einem Tensid T, in Wasser bereitstellt;
(c) eine pigmenthaltige Monomer-Miniemulsion herstellt, indem man die wässrige Pigmentdispersion aus (a) und die Monomer-Miniemulsion aus (b) zusammengibt und homogenisiert, sowie
(d) die pigmenthaltige Monomer-Miniemulsion aus (c) in Gegenwart eines Polymerisationsstarters und/oder durch Wärme polymerisiert, wobei eine Verkapselung des Pigments mit dem dabei entstehenden Polymer stattfindet.

### Herstellung der wässrigen Pigmentdispersion (a):

Zur Herstellung der wässrigen Pigmentdispersion wird das Pigment P, meist in Form eines Pulvers, Granulats oder Presskuchens, zusammen mit dem Tensid T in Wasser angeteigt und mit Hilfe eines Mahl- oder Dispergieraggregats dispergiert.

Als Pigment P wird vorzugsweise ein feinverteiltes, z.B. gemahlenes und/oder gefinishtes Pigment, als Pulver oder Presskuchen eingesetzt. Das Pigment P wird vorzugsweise in einer Menge 0,1 bis 50 Gew.-%, vorzugsweise 5 bis 40 Gew.-%, insbesondere 10 bis 30 Gew.-%, bezogen auf das Gesamtgewicht der wässrigen Pigmentdispersion, eingesetzt.

Die zur Dispergierung des Pigments P verwendeten Tenside T können nichtionischer, anionischer oder kationischer Art sein. Zudem können auch amphiphile Polymertenside oder auch polymerisierbare Tenside eingesetzt werden, die dann einen Bestandteil der Polymerkapsel bilden. Das Tensid T ist vorzugsweise ausgewählt aus der Gruppe der Phosphate, Carboxylate, polymeren Ethoxylate, Alkylethoxylate, Fettamine, Fettaminethoxylate, Fettalkoholethoxylate, Fettsäuresalze, Alkylsulfonate, Alkylsulfate, Alkylammoniumsalze und Zuckerethoxylate.

Beispiele für besonders bevorzugte Tenside sind Alkylsulfonate, wie SDS (Natriumdodecylsulfat), Alkylammoniumsalze, wie CTAB (Cetytrimethylammoniumbromid) oder Alkylethoxylate.

Das Tensid T wird vorzugsweise in einer Menge von 0,1 bis 50 Gew.-%, vorzugsweise 0,5 bis 20 Gew.-%, insbesondere 1 bis 10 Gew.-%, bezogen auf das Gesamtgewicht der wässrigen Pigmentdispersion, eingesetzt.

Zweckmäßigerweise werden die Komponenten Wasser und Tensid T zunächst vermischt und homogenisiert, dann das Pigment P in die vorgelegte Mischung eingerührt, wobei das Pigment angeteigt und vordispergiert wird. Je nach Kornhärte der eingesetzten Pigmente wird anschließend gegebenenfalls unter Kühlung mit Hilfe eines Mahl- oder Dispergieraggregats feindispergiert oder feinverteilt. Dazu können Rührwerke, Dissolver (Sägezahnrührer), Rotor-Stator-Mühlen, Kugelmühlen, Rührwerkskugelmühlen wie Sand- und Perlmühlen, Schnellmischer, Knetapparaturen, Walzenstühle oder Hochleistungsperlmühlen verwendet werden. Die Feindispergierung bzw. Mahlung der Pigmente erfolgt bis zur gewünschten Teilchengrößenverteilung und kann bei Temperaturen im Bereich von 0 bis 100°C erfolgen, zweckmäßig bei einer Temperatur zwischen 10 und 70°C, vorzugsweise bei 20 bis 60°C. Im Anschluss an die Feindispergierung kann die Pigmentdispersion mit Wasser, vorzugsweise entionisiertem oder destilliertem Wasser, weiter verdünnt werden.

### Herstellung der stabilisierten Monomer-Miniemulsion (b):

Zur Herstellung der Monomer-Miniemulsion werden ein oder mehrere polymerisierbare Monomere M vorzugsweise bei einer Temperatur zwischen 0°C und 100°C in eine wässrige Lösung eines Tensids T eingerührt und gegebenenfalls dispergiert, wobei eine Öl-in-Wasser-Emulsion entsteht. Bei Anwendung von erhöhtem Druck kann die Temperatur auch bis zu 120°C betragen.

Die polymerisierbaren Monomere M sind zweckmäßigerweise in einer Menge von 0,1 bis 80 Gew.-%, vorzugsweise 10 bis 70 Gew.-%, bezogen auf das Gesamtgewicht der besagten Emulsion, enthalten.

Das Tensid T ist zweckmäßigerweise in einer Menge von 0,1 bis 50 Gew.-%, vorzugsweise 0,5 bis 10 Gew.-%, bezogen auf das Gesamtgewicht der Monomeren M, enthalten.

Weiterhin wird eine hydrophobe organische Verbindung, die eine Wasserlöslichkeit bei 20°C von höchstens 5x 10⁻⁵ g/l aufweist, nachstehend Ultrahydrophob genannt, zugegeben.

Das Ultrahydrophob stabilisiert durch eine sehr geringe Wasserlöslichkeit die Tröpfchen osmotisch gegen Ostwald-Reifung.

Beispiele für das Ultrahydrophob sind Kohlenwasserstoffe, insbesondere volatile und gegebenenfalls halogenierte Kohlenwasserstoffe, z.B. Fluorkohlenwasserstoffe, Silane, Organosilane, Siloxane, langkettige Ester, Öle wie etwa Pflanzenöle, z.B. Olivenöl, verkappte Isocyanate sowie hydrophobe oligomere Polymerisations-, Polykondensations- und Polyadditionsprodukte, Fettsäurealkylester, Pentaerythrittriacrylat oder-trimethacrylat, soweit sie die vorstehend genannte Wasserlöslichkeit nicht überschreiten.

Das Ultrahydrophob ist zweckmäßigerweise in einer Menge von 1 bis 50 Gew.-%, vorzugsweise 1 bis 10 Gew.-%, bezogen auf das Gesamtgewicht der Monomeren M, enthalten.

Die vorstehend beschriebene Öl-in-Wasser-Emulsion weist in der Regel mittlere Tröpfchengrößen di (Intensitätsmittel) oberhalb von 1000 nm auf. Diese konventionellen "Makroemulsionen" werden dann durch Homogenisieren in Monomer-Miniemulsionen mit Tröpfchengrößen ≤ 1000 und vorzugsweise ≤ 500 nm überführt, zweckmäßigerweise bei einer Temperatur zwischen 0°C und 100°C. Bei Anwendung von erhöhtem Druck kann die Temperatur auch bis zu 120°C betragen.

Bevorzugt erfolgt die Homogenisierung bei einer Temperatur zwischen 10°C und 30°C.

Die Homogenisierung erfolgt bevorzugt durch Anwendung von Ultraschall, Hochdruckhomogenisatoren oder anderen hochenergetischen Homogenisierungsapparaturen. Die Anwendung von Ultraschall hat sich als besonders vorteilhaft erwiesen und führt in der Regel zu besonders hochwertigen Monomer-Miniemulsionen.

Bei dieser sogenannten Miniemulgierung wird die unpolare Ölphase der Monomere M in Wasser mit Hilfe eines Tensides T und unter Einsatz hoher Scherkräfte zu Tröpfchen mit einem mittleren Durchmesser di von ≤ 1000 nm, vorzugsweise ≤ 500 nm und insbesondere ≤ 400 nm dispergiert. In der Regel wird di wenigstens 40 nm und vorzugsweise wenigstens 100 nm betragen. Die Tröpfchengröße der Monomer-Miniemulsion wird durch quasielastische, dynamische Lichtstreuung ermittelt. Vorzugsweise weisen die Tröpfchen in der Monomer-Miniemulsion eine weitgehend einheitliche Größe auf, d.h. der Quotient (d90-d10)/d50 hat einen Wert ≤ 1, vorzugsweise ≤ 0,5, insbesondere ≤ 0,25.

Die Monomere M:
Die polymere Matrix für die Pigmentverkapselung kann aus Monomeren für Polyadditionsreaktionen erhalten werden. Hierbei entsteht die Polymermatrix sukzessive aus Monomeren M ohne Abspaltung von Nebenprodukten. Beispiel hierfür ist die Herstellung von Polyurethanen aus multifunktionellen Hydroxyverbindungen und multifunktionellen Isocyanaten, die Herstellung von Polyharnstoffen aus multifunktionellen Aminen und multifunktionellen Isocyanaten, die Herstellung von Polyhydroxycarbonsäuren, Polyaminosäuren, Polyamiden, Polyester, Polyimide, Polycarbonate, Aminoplaste, Phenoplaste, Polysulfide und die Herstellung von Polyepoxiden aus multifunktionellen Epoxiden und multifunktionellen Aminen, Thiolen oder/und Hydroxyverbindungen. Beispiele sind Polyurethane aus Isophorondiisocyanat oder Naphthodiisocyanat und zwei- oder höherwertigen Alkoholen, insbesondere Octandiol und Dodecandiol. Polyurethane entstehen beispielsweise aus Kondensation von Isophorondiisocyanat oder Naphthodiisocyanat mit zweiwertigen Aminen, insbesondere mit, gegebenenfalls substituierten, Phenylendiaminen, Ethylendiamin, Propylendiamin oder 1,6-Hexylendiamin. Polyepoxide sind beispielsweise Additionsprodukte von Diglycidether, Butadienepoxid oder auf Novolaken basierenden Polyepoxidharzen mit mehrwertigen Alkoholen, insbesondere Glykolen, bevorzugt Hexandiol.

Die polymere Matrix kann auch durch Polykondensationsreaktionen aus den geeigneten Monomeren aufgebaut werden. Polykondensationsreaktionen laufen in Stufen unter Abspaltung von Nebenprodukten ab. Beispiele sind unter anderem Unipolykondensationen, die unter Beteiligung eines einzigen Monomeren M ablaufen, z.B. einer Hydroxycarbonsäure oder einer Aminosäure, oder bei denen zwei verschiedene Monomere beteiligt sind, z.B. die Herstellung von Polyamiden aus multifunktionellen Carbonsäuren und multifunktionellen Aminen oder die Herstellung von Polyestern aus multifunktionellen Carbonsäuren und multifunktionellen Hydroxyverbindungen. Ein weiteres Beispiel für Polykondensationen sind Copolykondensationen, bei denen mehr als zwei verschiedene Monomere beteiligt sind. Auch andere Polymere können durch Polykondensation aus den entsprechenden Monomeren hergestellt werden, z.B. Polyimide, Polycarbonate, Aminoplaste, Phenoplaste, Polysulfide oder Harnstoffharze.

Bevorzugt kann die polymere Matrix aus radikalisch polymerisierbaren Monomeren M aus der Gruppe der Acrylsäure, Acrylester, Acrylnitril, Acrylamide, Methacrylsäure, Methacrylester, Vinylalkohole, Vinylether, Vinylamine, Vinylacetate, Vinylester, Styrole, Maleinsäureester, Maleinsäureanhydrid und Maleinsäure aufgebaut werden.

Bei der radikalischen Polymerisation können sich die Monomere M aus Monomeren der Klasse M1, vernetzenden Monomeren der Klasse M2 und/oder hydrophilen Monomeren der Klasse M3 zusammensetzen, wobei auch Mischungen mehrerer Monomeren gleicher Klassen oder Mischungen mehrerer Monomeren verschiedener Klassen verwendet werden können.

Die Monomere M1 sind vorzugsweise ausgewählt aus:
C₁-C₂₀-Alkyl- und C₅-C₁₀-Cycloalkylester von ethylenisch ungesättigten Mono- und Dicarbonsäuren, insbesondere der Acrylsäure und der Methacrylsäure. Bevorzugte Ester sind Methylmethacrylat, Ethylmethacrylat, n-Butylmethacrylat, tert.-Butyl-methacrylat, Isobutylmethacrylat, n-Hexylmethacrylat, Cyclohexylmethacrylat, 2-Ethylhexylmethacrylat, Methylacrylat, Ethylacrylat, n-Butylacrylat, tert.-Butylacrylat, Isobutylacrylat, Cyclohexylacrylat und 2-Ethylhexylacrylat;
Vinylestern von C₁-C₈-Monocarbonsäuren, beispielsweise Vinylacetat, Vinylpropionat, Vinylbutyrat und Vinylhexanoat;
Vinylaromatischen Monomeren, insbesondere Styrol;
C₂-C₆-Olefinen, wie Ethylen, Propen, 1-Buten, 2-Buten und Isobuten.

Die Monomere M1 machen in der Regel 20 bis 100 Gew.-%, vorzugsweise 70 bis 99,5 Gew.-%, insbesondere 80 bis 99 Gew.-%, des Monomerengemisches M aus. Es hat sich als vorteilhaft erwiesen, wenn die Monomere M neben den Monomeren M1 auch vernetzende Monomere M2 umfassen, die wenigstens zwei nicht konjugierte ethylenisch ungesättigte Doppelbindungen aufweisen. Geeignete Monomere M2 umfassen z. B. die Vinyl-, Allyl-, Methallyl- und Tricyclodecenylester der oben genannten ethylenisch ungesättigten Carbonsäuren, insbesondere der Methacrylsäure und der Acrylsäure; die Ester der oben genannten ethylenisch ungesättigten Carbonsäuren mit mehrwertigen Alkoholen, wie Ethylenglykoldiacrylat, Ethylenglykoldimethacrylat, Butandioldiacrylat, Butandioldimethacrylat, Hexandioldiacrylat, Hexandioldimethacrylat, Triethylenglykoldiacrylat, Triethylenglykoltrimethacrylat, Tris-(hydroxymethyl)ethantriacrylat und -trimethacrylat, Pentaerythrittriacrylat und -trimethacrylat;
die Allyl- und Methallylester von polyfunktionellen Carbonsäuren, wie Diallylmaleat, Diallylfumarat und Diallylphthalat.

Beispiele für Monomere M2 sind Divinylbenzol, Divinylharnstoff, Diallylharnstoff, Triallylcyanurat, N,N'-Divinyl- und N, N'-Diallylimidazolidin-2-on, sowie Methylenbisacrylamid und Methylenbismethacrylamid.

Die Monomere M2 machen in der Regel 0 bis 30 Gew.-% vorzugsweise 0,1 bis 20 Gew.-%, insbesondere 0,5 bis 10 Gew.-%, der Gesamtmenge der Monomerenmischung M aus.

Die Monomere M können weiterhin die hydrophilen Monomere M3 umfassen, die von den vorgenannten Monomeren M1 und M2 verschieden sind. Hierzu zählen Monomere, deren Homopolymerisate eine erhöhte Wasserlöslichkeit (d. h. > 80 g/l bei 25°C) aufweisen. Derartige Monomere M3 dienen als modifizierende Monomere. Zu den Monomeren M3 zählen sowohl monoethylenisch ungesättigte Monomere mit wenigstens einer Säuregruppe, z.B. einer COOH-, SO₃H- oder einer PO₃H₂-Gruppe, die auch in Salzform vorliegen kann (im Folgenden als anionische Monomere bezeichnet) und monoethylenisch ungesättigte, neutrale Monomere.

Beispiele für monoethylenisch ungesättigte anionische Monomere sind die vorgenannten monoethylenisch ungesättigten Mono- und Dicarbonsäuren, insbesondere Acrylsäure und Methacrylsäure, monoethylenisch ungesättigte Sulfonsäuren und Phosphonsäuren, z.B. Vinylsulfonsäure, Allylsulfonsäure, Methallylsulfonsäure, Styrolsulfonsäure, Vinylnaphthalinsulfonsäure und (Meth)acrylamido-2-methylpropansulfonsäure, weiterhin Vinylphosphonsäure, Allylphosphonsäure, Methallylphosphonsäure, Styrolphosphonsäure, und (Meth)acrylamido-2-methylpropanphosphonsäure, sowie deren wasserlösliche Salze, z.B. deren Alkalimetallsalze oder deren Ammoniumsalze, insbesondere deren Natriumsalze.

Beispiele für monoethylenisch ungesättigte, neutrale Monomere sind insbesondere die Amide monoethylenisch ungesättigter Mono- und Dicarbonsäuren, wie Acrylamid, Methacrylamid, weiterhin N-Vinyllactame mit 3 bis 8 C-Atomen, wie N-Vinylpyrrolidon und N-Vinylcaprolactam. Typische Monomere M3 sind Verbindungen, wie Acrylsäure, Acrylamid oder Styrolsulfonsäure.

Die Monomere M3 können 0 bis 80 Gew.-%, vorzugsweise 0,1 bis 40 Gew.-% und insbesondere 1 bis 20 Gew.-%, des Gesamtgewichts der Monomere M ausmachen. Im Falle der Verwendung wasserlöslicher Monomere M3 diffundieren diese während der Polymerisation in die Öl-Phase, gebildet aus den hydrophoben Monomeren M1 und gegebenenfalls M2, hinein.

### Herstellung der pigmenthaltigen Monomer-Miniemulsion c):

Die wässrige Pigmentdispersion aus (a) und die Monomer-Miniemulsion aus (b) werden zweckmäßigerweise in einem Gewichtsverhältnis, bezogen auf Pigment und Monomer M, von 5 zu 95 bis 95 zu 5, vorzugsweise von 50 zu 50 bis 90 zu 10, insbesondere von 75 zu 25 bis 85 zu 15, zusammengegeben und homogenisiert. Die Homogenisierung erfolgt, wie vorstehend unter (b) beschrieben, bevorzugt durch Anwendung von Ultraschall.

Hierbei findet über den sogenannten Fission/Fusions-Prozess eine Verkapselung des Pigments P mit den Monomeren M statt.

### Herstellung der wässrigen Dispersion polymerverkapselter Pigmente (d):

Die Herstellung der wässrigen Dispersion polymerverkapselter Pigmente erfolgt durch wässrige Miniemulsionspolymerisation der homogenisierten pigmenthaltigen Monomer-Miniemulsion (c), deren Emulsionströpfchen das Pigment dispergiert enthalten und die im Unterschied zu konventionellen Öl-in-Wasser-Emulsionen einen Tröpfchendurchmesser < 1000 nm, insbesondere ≤ 500 nm, aufweisen.

Im Falle einer Polyaddition oder Polykondensation erfolgt die Polymerisierung in der Regel bei einer Temperatur von 30°C bis 100°C, bevorzugt 50°C bis 90°C.

Im Falle einer radikalischen Polymerisation führt man die Polymerisation in Gegenwart eines Polymerisationsinitiators PI durch.

Die Polymerisationstemperaturen richten sich in erster Linie nach dem jeweils eingesetzten Initiatorsystem in bekannter Weise. Üblicherweise liegen die Polymerisationstemperaturen im Bereich von 0 bis 95°C, vorzugsweise im Bereich von 30 bis 90°C. Bei Anwendung von erhöhtem Druck kann die Polymerisationstemperatur auch bis zu 120°C betragen. Üblicherweise wird bei Normaldruck (1 bar) polymerisiert.

Die Menge an eingesetztem Initiator liegt in der Regel im Bereich von 0,1 bis 10 Gew.-%, vorzugsweise 0,2 bis 8 Gew.-% und häufig im Bereich von 0,3 bis 5 Gew.-%, bezogen auf die Monomeren M.

Dabei kann man bei wasserlöslichen Polymerisationsinitiatoren PI so vorgehen, dass man die pigmenthaltige Monomer-Miniemulsion nach dem Homogenisieren in einem Reaktor vorlegt und hierzu den Polymerisationsinitiator PI unter Polymerisationsbedingungen in einer Portion oder in mehreren Portionen oder kontinuierlich nach Maßgabe seines Verbrauchs zugibt. Auch kann man zunächst einen Teil oder die Gesamtmenge des Polymerisationsinitiators zu der Emulsion geben und anschließend auf Polymerisationstemperatur erwärmen.

Es ist auch möglich, einen Teil oder die Gesamtmenge der pigmenthaltigen Monomer-Miniemulsion dem Reaktor unter Polymerisationsbedingungen nach Maßgabe des Fortschreitens der Umsetzung zuzugeben. Vorzugsweise führt man dabei den Polymerisationsinitiator zumindest teilweise parallel zur Zugabe der pigmenthaltigen Monomer-Miniemulsion dem Reaktor zu.

Bei öllöslichen Polymerisationsinitiatoren PI erfolgt die Zugabe des Polymerisationsinitiators vorzugsweise vor der oben beschriebenen Homogenisierung. Die nachfolgende-Polymerisation erfolgt analog.

Als radikalischer Polymerisationsstarter kommen prinzipiell alle diejenigen in Betracht, die in der Lage sind, eine radikalische Polymerisation auszulösen. Es handelt sich hierbei sowohl um Peroxide, Hydroperoxide als auch um Azoverbindungen. Die radikalischen Polymerisationsinitiatoren können sowohl wasserlöslich sein als auch öllöslich, d. h. in den Monomeren löslich, sein. Beispiele für wasserlösliche Initiatoren sind Peroxodischwefelsäure und ihre Ammonium- und Alkalimetallsalze, Wasserstoffperoxid oder niedermolekulare Hydroperoxide, wie tert.-Butylhydroperoxid, oder salzartige Azoverbindungen, z.B. 2,2'-Azobis-2-amidinopropan-dihydrohalogenid.

Beispiele für öllösliche Polymerisationsinitiatoren sind hydrophobe Azoinitiatoren, z.B. AIBN (Azoisobutyronitril), des weiteren C₄-C₁₂-Peroxocarbonsäuren sowie ihre Ester, z.B. Peroctanoate, und Perbenzoate, wie tert.-Butylperoctanoat und tert.-Butylperbenzoat, sowie Diacylperoxide, wie Dibenzoylperoxid.

Die vorgenannten, wasserlöslichen peroxidischen Polymerisationsinitiatoren können auch mit einem Reduktionsmittel und gegebenenfalls mit einer im wässrigen Medium löslichen Metallverbindung kombiniert werden (sogenannte Redox-Initiatorsysteme). Diese sind dem Fachmann hinreichend bekannt. Beispiel für besonders bevorzugte radikalische Polymerisationsstarter sind AIBN (Azoisobutyronitril) oder MCPBA (3-Chlorperbenzoesäure).

Die Polymermatrix:
Während der Polymerisation findet eine Verkapselung des Pigments mit einer Polymermatrix statt. Die mittlere Teilchengröße (Teilchendurchmesser) der polymerverkapselten Pigmentpartikel liegt vorzugsweise im Bereich von 50 bis 500 nm und insbesondere im Bereich von 70 bis 300 nm. Die mittlere Teilchengröße entspricht dem Intensitätsmittel, welches in bekannter Weise durch quasielastische Lichtstreuung einer verdünnten wässrigen Dispersion der polymerverkapselten Pigmentepartikel (berechnet durch unimodale Analyse der Autokorrelationsfunktion) ermittelt werden kann. Die Messungen werden in der Regel an 0,1 gew.-%igen Proben bei Normalbedingungen (1 bar, 25°C) vorgenommen.

Die Spezieshomogenität wird mittels Ultrazentrifugation im Zuckergradienten (Haushaltszucker, Gradient in 4 Schritten von 0% Zucker bis zu einer gesättigten wässrigen Zuckerlösung) ermittelt.

Pigmenthaltige Polymerpulver:
Gegenstand der vorliegenden Erfindung sind auch durch eine Polymerhülle verkapselte Pigmentpartikel, wobei das Pigment ein organisches Pigment P aus der Gruppe der Azo-, Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron-, Perylen-, Perinon-, Pyranthtron-, Diketopyrrolopyrrol-, Isoviolanthron- und Azomethinpigmente ist; die polymerverkapselten Pigmentpartikel eine mittlere Teilchengröße di (Intensitätsmittel) zwischen 50 und 600 nm haben;
der Pigmentgehalt der polymerverkapselten Pigmentpartikel 50 bis 95 Gew.-%, vorzugsweise 50 bis 90 Gew.-%, insbesondere 75 bis 85 Gew.-%, beträgt, und der Gehalt an Homopolymerpartikeln kleiner als 5 Gew.-%, vorzugsweise kleiner als 4 Gew.-%, insbesondere kleiner als 3 Gew.-%, bezogen auf das Gesamtgewicht der polymerverkapselten Pigmentpartikel ist. In der Regel liegt der Gehalt an Homopolymerpartikeln zwischen 0,01 Gew.-% und 4,9 Gew.-%, oftmals zwischen 0,1 Gew.-% und 3,9 Gew.-% und meist zwischen 0,5 und 2,0 Gew.-%.

Die Partikelspeziesverteilung, d.h. die Abweichung der einzelnen Partikel voneinander hinsichtlich ihrer Größe ist meist kleiner als 20 %, insbesondere kleiner als 10 %, und die Abweichung hinsichtlich ihres Pigmentgehalts ist meist kleiner als 5 % , bevorzugt kleiner als 3 %, insbesondere kleiner als 2 %.

Bevorzugte Pigmente sind C.I. Pigment Yellow 83, 74, P.Red 122, P.Blue 15:3.

Das polymerverkapselte Pigmentpulver kann durch Verdampfen der flüchtigen Bestandteile der wässrigen Dispersion polymerverkapselter Pigmente erhalten werden. Das Verdampfen der flüchtigen Bestandteile erfolgt in Analogie zu bekannten Verfahren der Pulverherstellung aus wässrigen Polymerdispersionen. Überraschenderweise gelingt das Verdampfen der flüchtigen Bestandteile auch ohne den üblicherweise erforderlichen Zusatz von Sprühhilfsmitteln. Anders als bei konventionellen Polymerdispersionen zeigen die erfindungsgemäßen Dispersionen beim Verdampfen der flüchtigen Bestandteile keine unerwünschte irreversible Aggregierung der polymerverkapselten Pigmentpartikel. Die polymerverkapselten Pigmentpulver lassen sich daher leicht wieder in einer wässrigen Phase redispergieren.

Das Verdampfen der flüchtigen Bestandteile erfolgt beispielsweise durch Sprühtrocknung der erfindungsgemäßen polymerverkapselten Pigmentdispersion in einem Warmluftstrom oder durch Gefriertrocknung. Verfahren zur Sprühtrocknung und zur Gefriertrocknung wässriger Dispersionen sind dem Fachmann bekannt.

Nichtflüchtige Bestandteile, z.B. die Tenside T, können z.B. durch Ultrazentrifugation, Dialyse oder Membranfiltration abgetrennt werden.

### Anwendungen:

Die erfindungsgemäßen verkapselten Pigmentpartikel lassen sich zum Pigmentieren von hochmolekularen organischen Materialien natürlicher oder synthetischer Herkunft verwenden, beispielsweise von Kunststoffen, Harzen, Lacken, Anstrichfarben, elektrophotographischen Tonern und Entwicklern, Elektronikmaterialien, Farbfilter sowie von Tinten und Druckfarben. Hochmolekulare organische Materialien, die mit den erfindungsgemäßen Farbmitteln pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.

Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Farbmittel als Blend oder in Form von Präparationen oder Dispersionen zu benutzen. Bezogen auf das zu pigmentierende, hochmolekulare organische Material setzt man die erfindungsgemäßen Farbmittel in einer Menge von 0,05 bis 30 Gew.-%, vorzugsweise 0,1 bis 15 Gew.-%, ein.

Die erfindungsgemäßen Farbmittel sind auch zum Färben von elektrophotographischen Tonern und Entwicklern geeignet, wie beispielsweise Ein- oder Zweikomponentenpulvertonern (auch Ein- oder Zweikomponenten-Entwickler genannt), Magnettoner, Flüssigtoner, Latextoner, Polymerisationstoner sowie Spezialtoner.

Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen Farbmittel zum Färben von Pulvern und Pulverlacken geeignet, insbesondere von triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Gegenstand der Erfindung ist weiterhin die Verwendung der beschriebenen Farbmittel zum Färben von Drucktinten, insbesondere für Ink-Jet-Tinten. Unter Ink-Jet-Tinten versteht man sowohl Tinten auf wässriger (einschließlich Mikroemulsionstinten) und nicht-wässriger ("solvent-based") Basis, UV-härtbare Tinten sowie solche Tinten, die nach dem Hot-Melt-Verfahren arbeiten. Ink-Jet-Tinten auf Lösungsmittelbasis enthalten im wesentlichen 0,5 bis 30 Gew.-%, vorzugsweise 1 bis 15 Gew.-%, der erfindungsgemäßen Farbmittel, 70 bis 95 Gew.-% eines organischen Lösungsmittels oder Lösungsmittelgemisches und/oder einer hydrotropen Verbindung. Gegebenenfalls können die lösemittelbasierenden Ink-Jet-Tinten Trägermaterialien und Bindemittel enthalten, die im "Solvens" löslich sind, wie z.B. Polyolefine, Natur- und Synthesekautschuk, Polyvinylchlorid, Vinylchlorid/ Vinylacetat-Copolymerisate, Polyvinylbutyrale, Wachs/Latex-Systeme oder Kombinationen dieser Verbindungen.

Gegebenenfalls können die lösungsmittelbasierenden Ink-Jet-Tinten noch weitere Zusatzstoffe enthalten, wie z.B. Netzmittel, Entgaser/Entschäumer, Konservierungsmittel und Antioxidantien.

Mikroemulsionstinten basieren auf organischen Lösemitteln, Wasser und gegebenenfalls einer zusätzlichen Substanz, die als Grenzflächenvermittler wirkt (Tensid). Mikroemulsionstinten enthalten 0,5 bis 30 Gew.-%, vorzugsweise 1 bis 15 Gew.-%, der erfindungsgemäßen Farbmittel, 0,5 bis 95 Gew.% Wasser und 0,5 bis 95 Gew.-% organische Lösungsmittel und/oder Grenzflächenvermittler. UV-härtbare Tinten enthalten im wesentlichen 0,5 bis 30 Gew.-% der erfindungsgemäßen Farbmittel, 0,5 bis 95 Gew.-% Wasser, 0,5 bis 95 Gew.-% eines organischen Lösungsmittels oder Lösungsmittelgemisches, 0,5 bis 50 Gew.-% eines strahlungshärtbaren Bindemittels und gegebenenfalls 0 bis 10 Gew.-% eines Photoinitiators.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 und ca. 140°C liegt.

Hot-Melt-Ink-Jet-Tinten bestehen im wesentlichen aus 20 bis 90 Gew.-% Wachs und 1 bis 10 Gew.-% der erfindungsgemäßen Farbmittel. Weiterhin können 0 bis 20 Gew.-% eines zusätzlichen Polymers (als "Farbstofflöser"), 0 bis 5 Gew.% Dispergiermittel,

0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. die Kristallisation des Wachses) sowie 0 bis 2 Gew.-% Antioxidans enthalten sein.

Die erfindungsgemäßen Drucktinten, insbesondere Ink-Jet-Tinten, können hergestellt werden, indem das Farbmittel in das Mikroemulsionsmedium, in das nicht-wässrige Medium oder in das Medium zur Herstellung der UV-härtbaren Tinte oder in das Wachs zur Herstellung einer Hot-Melt-Ink-Jet-Tinte eindispergiert wird.

Zweckmäßigerweise werden die dabei erhaltenen Drucktinten für Ink-Jet-Anwendungen anschließend filtriert (z.B. über einen 1 µm Filter).

Die erfindungsgemäßen Drucktinten können in Farbensets, bestehend aus Cyan, Magenta, Gelb und Schwarz, im Set für Inkjet-Tintensets zur Abdeckung des Farbenraumes verwendet werden.

Zum Abtönen (shaden) der erfindungsgemäßen Drucktinten können Farbstoffe zugesetzt werden.

Weiterhin sind die erfindungsgemäßen Farbmittel auch zum Färben von Farbfiltern, sowohl für die additive wie auch für die subtraktive Farberzeugung, sowie als Farbmittel für elektronische Tinten ("electronic inks" bzw. "e-inks") oder "electronic paper" ("e-paper") geeignet.

Bei der Herstellung so genannter Farbfilter, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD= Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink-Jet-Druckverfahren oder andere geeignete Druckverfahren aufgebracht werden.

In den nachfolgenden Beispielen bedeuten Prozente Gewichtsprozente.

### Beispiel 1

a) Herstellung der wässrigen Pigmentdispersion:
   In einem Becherglas werden 200 ml Wasser und 6 g SDS (Natriumdodecylsulfat) vorgelegt und vermischt. In diese Mischung wird 68 g des Pigmentpulvers P.Y. 74 eingewogen und mit Hilfe eines Dissolvers 15 min bei 3500 U/min vordispergiert. Anschließend gibt man die Mischung in eine Perlmühle, die mit keramischen Perlen (0,6-0,8 mm) zu 85-90 % beladen wird. Die Mischung wird 2 Stunden bei 2000 U/min gemahlen. Anschließend gibt man Wasser (123 ml) zu und führt die Mahlung noch 15 min fort, um das Wasser homogen unterzumischen. Dann wird die Dispersion aus der Mühle abgelassen.
b) Herstellung der stabilisierten Monomer-Miniemulsion:
   6 g Styrol (Monomer M), 250 mg Hexadekan (Ultrahydrophob) und 100 mg AIBN (Polymerisationsinitiator PI) werden zu einer Lösung aus 72 mg Natriumdodecylsulfat (Tensid T) in 24 g Wasser gegeben und eine Stunde bei höchster Magnetrührerstufe emulgiert. Anschließend findet die Miniemulgierung bei 90 % Amplitude (Branson Sonifier W450) unter Eiskühlung statt.
c) Herstellung der pigmenthaltigen Monomer-Miniemulsion:
   20 g einer mit Wasser verdünnten 10%igen Pigmentdispersion von P.Y. 74 aus Schritt a) werden mit 2.5 g einer 20 %igen Styrol-Miniemulsion aus Schritt b) unter Rühren bei Raumtemperatur versetzt.
   Anschließend findet eine weitere Miniemulgierung für weitere 2 min unter Eiskühlung statt. Hierbei findet über den sogenannten Fission/Fusion-Prozess eine Verkapselung des Pigments mit dem Monomeren statt.
d) Polymerisation:
   Anschließend wird die Polymerisation des Styrols unter Rühren durch Erhitzen auf eine Temperatur von 70°C herbeigeführt.
   Die Homogenität der verkapselten Pigmente wurde via Ultrazentrifugation im Zuckergradienten und über TEM-Aufnahmen ermittelt. Die Größenverteilung vor und nach der Verkapselung wurde durch die dynamischen Lichtstreuung bestimmt (di = Intensitätsmittel).

### Beispiel 2

Das Verhältnis Pigment zu Styrol wurde auf 50/50 eingestellt. Herstellung analog Beispiel 1.

### Beispiel 3

Herstellung analog Beispiel 1. Statt Styrol wurde Butylacrylat eingesetzt.

### Beispiel 4

Herstellung analog Beispiel 1. Statt Styrol wurde eine Mischung aus 90 % Styrol und 10 % Acrylsäure eingesetzt.

### Beispiel 5

Herstellung analog Beispiel 1. Statt PY74 wurde ein PY83 verwendet.

### Beispiel 6

Herstellung analog Beispiel 1. Statt P.Y. 74 wurde P.R. 122 eingesetzt, und die Menge von AIBN wurde von 100 mg auf 250 mg erhöht.

### Beispiel 7

Herstellung analog Beispiel 1. Statt P.Y. 74 wurde P.B. 15:3 eingesetzt und die Menge von AIBN wurde von 100 mg auf 250 mg erhöht.

### Beispiel 8

Verkapselung mit Polyurethan: Herstellung analog Beispiel 1. Statt Styrol wurde ein Gemisch aus Isophorondiisocyanat und Dodecandiol im Verhältnis 1:1 und statt AIBN wurde Dibutylzinnlaurat eingesetzt. Die Polymerisation wurde bei 60°C durchgeführt.

### Beispiel 9

Herstellung analog Beispiel 8. Isophorondiisocyanat und Dodecandiol wurde im Verhältnis 1.05:1 eingesetzt.

### Beispiel 10

Herstellung analog Beispiel 8. Isophorondiisocyanat und Dodecandiol wurden im Verhältnis 1.1:1 eingesetzt.

### Beispiel 11

Herstellung analog Beispiel 8. Anstatt Dodecandiol wurde Octandiol eingesetzt.

### Beispiel 12

Verkapselung mit Polyestern: Herstellung analog Beispiel 1. Statt Styrol wurde Pentadecanolid (1-Oxa-Cyclohexadecan-2-on) ohne einen Katalysator eingesetzt. Die Polymerisation zu Poly-ω-hydroxypentadecansäureester wurde bei 30-40°C durch den Zusatz des Enzyms Lipase PS (0.5 % bezogen auf das Monomer) durchgeführt.

### Beispiel 13

Herstellung analog Beispiel 12, wobei der Feststoffgehalt auf 7,3 % durch Zugabe von Wasser vor Beginn der Polymerisation eingestellt wurde

**Tabelle 1: Größenverteilung vor und nach der Verkapselung bestimmt durch dynamische Lichtstreuung.**

| | Verhältnis | di [nm] |
|---|---|---|
| | Pigment / Polymer | (aus dynamischer Lichtstreuung) |
| PY74 | 100/0 | 127 |
| Beispiel 1 | 80/20 | 160 |
| Beispiel 2 | 50/50 | 190 |
| Beispiel 3 | 80/20 | 170 |
| Beispiel 4 | 80/20 | 208 |
| PY83 | 100/0 | 162 |
| Beispiel 5 | 80/20 | 166 |
| PR122 | 100/0 | <110 |
| Beispiel 6 | 80/20 | 149 |
| PB15:3 | 100/0 | <100 |
| Beispiel 7 | 80/20 | 115 |
| PY74 | 100/0 | 127 |
| Beispiel 8 | 80/20 | 156 |
| Beispiel 9 | 80/20 | 138 |
| Beispiel 10 | 80/20 | 300 |
| Beispiel 11 | 80/20 | 481 |
| Beispiel 12 | 80/20 | 499 |
| Beispiel 13 | 80/20 | 279 |

In allen Beispielen wurden die erhaltenen polymerverkapselten Pigmentteilchen durch Ultrazentrifugation im Dichtegradienten sowie durch TEM-Aufnahmen untersucht. Es wurden praktische keine Homopolymer-Partikel (leere Tröpfchen) detektiert.

## Patentansprüche

1. Verfahren zur Herstellung einer wässrigen Dispersion polymerverkapselter Pigmente, **dadurch gekennzeichnet, dass** man
(a) eine wässrige Pigmentdispersion, enthaltend mindestens ein organisches Pigment P aus der Gruppe der Azo-, Isoindolinon-, Isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron-, Perylen-, Perinon-, Pyranthtron-, Diketopyrrolopyrrol-, Isoviolanthron- und Azomethinpigmente, mindestens ein Tensid T, und Wasser, bereitstellt;
(b) eine durch eine hydrophobe organische Verbindung, die eine Wasserlöslichkeit bei 20°C von höchstens 5x 10⁻⁵ g/l aufweist, stabilisierte Monomer-Miniemulsion aus mindestens einem polymerisierbaren Monomer M und mindestens einem Tensid T, in Wasser bereitstellt;
(c) eine pigmenthaltige Monomer-Miniemulsion herstellt, indem man die wässrige Pigmentdispersion aus (a) und die Monomer-Miniemulsion aus (b) zusammengibt und homogenisiert, sowie
(d) die pigmenthaltige Monomer-Miniemulsion aus (c) in Gegenwart eines Polymerisationsstarters und/oder durch Wärme polymerisiert, wobei eine Verkapselung des Pigments mit dem dabei entstehenden Polymer stattfindet.

2. Verfahren nach Anspruch 1, **dadurch gekennzeichnet, dass** in Schritt (a) das Pigment P zusammen mit dem Tensid T in Wasser angeteigt und mit Hilfe eines Mahl- oder Dispergieraggregats dispergiert wird.

3. Verfahren nach Anspruch 1 oder 2, **dadurch gekennzeichnet, dass** in Schritt (a) das Tensid T in einer Menge von 0,1 bis 50 Gew.-%, bezogen auf das Gesamtgewicht der wässrigen Pigmentdispersion, eingesetzt wird.

4. Verfahren nach einem oder mehreren der Ansprüche 1 bis 3, **dadurch gekennzeichnet, dass** das Tensid T ausgewählt ist aus der Gruppe der Phosphate, Carboxylate, polymeren Ethoxylate, Fettamine, Fettaminethoxylate, Fettalkoholethoxylate, Fettsäuresalze, Alkylsulfonate, Alkylsulfate, Alkylammoniumsalze und Zuckerethoxylate.

5. Verfahren nach einem oder mehreren der Ansprüche 1 bis 4, **dadurch gekennzeichnet, dass** in Schritt (a) das Pigment P in einer Menge von 0,1 bis 50 Gew.-%, bezogen auf das Gesamtgewicht der wässrigen Pigmentdispersion, eingesetzt wird.

6. Verfahren nach einem oder mehreren der Ansprüche 1 bis 5, **dadurch gekennzeichnet, dass** in Schritt (b) mindestens ein polymerisierbares Monomer M in eine wässrige Lösung eines Tensids T eingerührt, eine hydrophobe organische Verbindung, die eine Wasserlöslichkeit bei 20°C von höchstens 5x 10⁻⁵ g/l aufweist, zugegeben und zu einer Monomer-Miniemulsion homogenisiert wird.

7. Verfahren nach mindestens einem der Ansprüche 1 bis 6, **dadurch gekennzeichnet, dass** das polymerisierbare Monomer M eine radikalisch polymerisierbare Verbindung aus der Gruppe der Acrylsäure, Acrylester, Acrylnitril, Acrylamide, Methacrylsäure, Methacrylester, Vinylalkohole, Vinylether, Vinylamine, Vinylacetate, Vinylester, Styrole, Maleinsäureester, Maleinsäureanhydrid und Maleinsäure ist.

8. Verfahren nach mindestens einem der Ansprüche 1 bis 6, **dadurch gekennzeichnet, dass** das Pigment durch eine Polymerhülle verkapselt wird, ausgewählt aus der Gruppe der Polyhydroxycarbonsäuren, Polyaminosäuren, Polyamiden, Polyester, Polyimide, Polycarbonate, Aminoplaste, Phenoplaste, Polysulfide, Polyepoxide und Harnstoffharze.

9. Verfahren nach mindestens einem der Ansprüche 1 bis 6, **dadurch gekennzeichnet, dass** das Pigment durch eine Polymerhülle verkapselt wird, ausgewählt aus der Gruppe der Polyurethane, Polyharnstoffe und Polyepoxide.

10. Verfahren nach mindestens einem der Ansprüche 1 bis 9, **dadurch gekennzeichnet, dass** in Schritt (b) das polymerisierbare Monomer M in einer Menge von 0,1 bis 80 Gew.-%, bezogen auf das Gesamtgewicht der Emulsion, zugegebenen wird.

11. Verfahren nach mindestens einem der Ansprüche 1 bis 10, **dadurch gekennzeichnet, dass** in Schritt (b) das Tensid T in einer Menge von 0,1 bis 50 Gew.-%, bezogen auf das Gesamtgewicht der Monomere M, zugegeben wird.

12. Verfahren nach mindestens einem der Ansprüche 1 bis 11, **dadurch gekennzeichnet, dass** in Schritt (b) die hydrophobe organische Verbindung in einer Menge von 1 bis 50 Gew.-%, bezogen auf das Gesamtgewicht der Monomere M, zugegeben wird.

13. Verfahren nach mindestens einem der Ansprüche 1 bis 12, **dadurch gekennzeichnet, dass** in Schritt (c) die wässrige Pigmentdispersion aus (a) und die Monomer-Miniemulsion aus (b) in einem Gewichtsverhältnis von 5 zu 95 bis 95 zu 5, bezogen auf das Gewicht der Monomere M und das Gewicht des Pigments P, zusammengegeben werden.

14. Verfahren nach mindestens einem der Ansprüche 1 bis 12, **dadurch gekennzeichnet, dass** die Homogenisierung durch Einwirkung von Ultraschall erfolgt.

15. Durch eine Polymerhülle verkapselte Pigmentpartikel, wobei das Pigment ein organisches Pigment P aus der Gruppe der Azo-, isoindolinon-, isoindolin-, Anthanthron-, Thioindigo-, Thiazinindigo-, Triarylcarbonium-, Chinophthalon-, Anthrachinon-, Dioxazin-, Phthatocyanin-, Chinacridon-, Chinacridonchinon-, Indanthron-, Perylen-, Perinon-, Pyranthtron-, Diketopyrrolopyrrol-, Isoviolanthron-und Azomethinpigmente ist;
die polymerverkapselten Pigmentpartikel eine mittlere Teilchengröße di (intensitätsmittel) zwischen 50 und 600 nm haben;
der Pigmentgehalt der polymerverkapselten Pigmentpartikel 50 bis 95 Gew.-%; und
der Gehalt an Homopolymerpartikeln kleiner als 5 Gew.-%, bezogen auf das Gesamtgewicht der verkapselten Pigmentpartikel, ist.

16. Verkapselte Pigmentpartikel nach Anspruch 15, **dadurch gekennzeichnet, dass** die Abweichung der einzelnen Partikel voneinander hinsichtlich ihrer Teilchengröße kleiner als 20 %, und die Abweichung hinsichtlich ihres Pigmentgehalts kleiner als 5% ist.

17. Durch eine Polymerhülle vercapselte Pigmentpartikel, erhältlich nach einem Verfahren gemäß einem oder mehreren der Ansprüche 1 bis 14 wobei das Pigment ein organisches Pigment P aus der Gruppe der Azo-, isoindolinon-, isoindolin-, Anthanthron-, Thioindigo-, Thiazinindigo-, Triarylcarbonium-, Chinophthalon-, Anthrachinon-, Dioxazin-, Phthalocyanin-, Chinacridon-, Chinacridonchinon-, Indanthron-, Perylen-, Perinon-, Pyranthtron-, Diketopyrrolopyrrol-, Isoviolanthron-
und Azomethinpigmente ist; die polymerverkapselten Pigmentpartikel eine mittlere Teilchengröße di (Intensitätsmittel) zwischen 30 und 600 nm haben;
der Pigmentgehalt der polymerverkapselten Pigmentpartikel 5 bis 95 Gew.-%; und
der Gehalt an Homopolymerpartikeln kleiner als 5 Gew.-%, bezogen auf das Gesamtgewicht der verkapselten Pigmentpartikel, ist.

18. Verkapselte Pigmentpartikel nach Anspruch 15, 16 oder 17, **dadurch gekennzeichnet, dass** die polymerverkapselten Pigmentpartikel eine mittlere Teilchengröße di (Intensitätsmittel) zwischen 70 und 300 nm haben, und der Pigmentgehalt der polymerverkapselten Pigmentpartikel 75 bis 85 Gew.-% beträgt.

19. Verwendung der verkapselten Pigmentpartikel nach Anspruch 15, 16, 17 oder 18 zum Pigmentieren von Kunststoffen, Harzen, Lacken, Anstrichfarben, Druckfarben, elektrophotographischen Tonern und Entwicklern, Pulvern und Pulverlacken, Tinte, Elektronikmateriallen, Ink-Jet-Tinten und Colorfiltern.

## Claims

1. A method of producing an aqueous dispersion of polymer-encapsulated pigments, which comprises
(a) preparing an aqueous pigment dispersion comprising at least one organic pigment P from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments, at least one surfactant T, and water;
(b) providing a monomer miniemulsion which is stabilized via hydrophobic organic compound having a water solubility at 20°C of not more than 5x10⁻⁵ g/l and which is composed of at least one polymerizable monomer M and at least one surfactant T, in water;
(c) producing a pigment-containing monomer miniemulsion by combining and homogenizing the aqueous pigment dispersion from (a) and the monomer miniemulsion from (b), and
(d) polymerizing the pigment-containing monomer miniemulsion from (c) in the presence of a polymerization initiator and/or by heat, accompanied by encapsulation of the pigment with the polymer that forms.

2. The method as claimed in claim 1, wherein in step (a) the pigment P is pasted together with the surfactant T in water and the paste is dispersed with the aid of a grinding or dispersing assembly.

3. The method as claimed in claim 1 or 2, wherein in step (a) the surfactant T is used in an amount of 0.1 % to 50% by weight, based on the total weight of the aqueous pigment dispersion.

4. The method as claimed in one or more of claims 1 to 3, wherein the surfactant T is selected from the group of phosphates, carboxylates, polymeric ethoxylates, fatty amines, fatty amine ethoxylates, fatty alcohol ethoxylates, fatty acid salts, alkylsulfonates, alkyl sulfates, alkylammonium salts, and sugar ethoxylates.

5. The method as claimed in one or more of claims 1 to 4, wherein in step (a) the pigment P is used in an amount of 0.1 % to 50% by weight, based on the total weight of the aqueous pigment dispersion.

6. The method as claimed in one or more of claims 1 to 5, wherein in step (b) at least one polymerizable monomer M is incorporated by stirring into an aqueous solution of a surfactant T, a hydrophobic organic compound having a water solubility at 20°C of not more than 5x10⁻⁵ g/l is added, and the mixture is homogenized to form a monomer miniemulsion.

7. The method as claimed in at least one of claims 1 to 6, wherein the polymerizable monomer M is a free-radically polymerizable compound from the group of acrylic acid, acrylic esters, acrylonitrile, acrylamides, methacrylic acid, methacrylic esters, vinyl alcohols, vinyl ethers, vinylamines, vinyl acetates, vinyl esters, styrenes, maleic esters, maleic anhydride, and maleic acid.

8. The method as claimed in at least one of claims 1 to 6, wherein the pigment is encapsulated by a polymer shell selected from the group of polyhydroxycarboxylic acids, polyamino acids, polyamides, polyesters, polyimides, polycarbonates, amino resins, phenolic resins, polysulfides, polyepoxides, and urea resins.

9. The method as claimed in at least one of claims 1 to 6, wherein the pigment is encapsulated by a polymer shell selected from the group of polyurethanes, polyureas, and polyepoxides.

10. The method as claimed in at least one of claims 1 to 9, wherein in step (b) the polymerizable monomer M is added in an amount of 0.1 % to 80% by weight, based on the total weight of the emulsion.

11. The method as claimed in at least one of claims 1 to 10, wherein in step (b) the surfactant T is added in an amount of 0.1 % to 50% by weight, based on the total weight of the monomers M.

12. The method as claimed in at least one of claims 1 to 11, wherein in step (b) the hydrophobic organic compound is added in an amount of 1% to 50% by weight, based on the total weight of the monomers M.

13. The method as claimed in at least one of claims 1 to 12, wherein in step (c) the aqueous pigment dispersion from (a) and the monomer miniemulsion from (b) are combined in a weight ratio of 5:95 to 95:5, based on the weight of the monomers M and the weight of the pigment P.

14. The method as claimed in at least one of claims 1 to 12, wherein the homogenization is accomplished by exposure to ultrasound.

15. Pigment particles encapsulated by a polymer shell, the pigment being an organic pigment P from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments;
the polymer-encapsulated pigment particles have an average particle size di (intensity average) between 50 and 600 nm;
the pigment content of the polymer-encapsulated pigment particles is 50% to 95% by weight; and
the homopolymer particle content is less than 5% by weight, based on the total weight of the encapsulated pigment particles.

16. The encapsulated pigment particles as claimed in claim 15, wherein the deviation of the individual particles from one another in terms of their particle size is less than 20% and the deviation in terms of their pigment content is less than 5%.

17. Pigment particles encapsulated by a polymer shell, obtainable by a method as claimed in one or more of claims 1 to 14, the pigment being an organic pigment P from the group of azo, isoindolinone, isoindoline, anthanthrone, thioindigo, thiazineindigo, triarylcarbonium, quinophthalone, anthraquinone, dioxazine, phthalocyanine, quinacridone, quinacridonequinone, indanthrone, perylene, perinone, pyranthrone, diketopyrrolopyrrole, isoviolanthrone, and azomethine pigments;
the polymer-encapsulated pigment particles have an average particle size di (intensity average) between 30 and 600 nm;
the pigment content of the polymer-encapsulated pigment particles is 5% to 95% by weight; and
the homopolymer particle content is less than 5% by weight, based on the total weight of the encapsulated pigment particles.

18. Encapsulated pigment particles as claimed in claim 15, 16 or 17, wherein the polymer-encapsulated pigment particles have an average particle size di (intensity average) between 70 and 300 nm and the pigment content of the polymer-encapsulated pigment particles is 75% to 85% by weight.

19. The use of the encapsulated pigment particles as claimed in claim 15, 16, 17 or 18 for pigmenting plastics, resins, varnishes, paints, inks, including printing inks and ink-jet inks, electrophotographic toners and developers, powders and powder coating materials, electronic materials, and color filters.

## Revendications

1. Procédé pour la préparation d'une dispersion aqueuse de pigments encapsulés par des polymères, **caractérisé en ce que**
(a) on met à disposition une dispersion aqueuse pigmentaire, contenant au moins un pigment organique P du groupe formé par les pigments azo, iso-indolinone, iso-indoline, anthanthrone, thio-indigo, thiazine-indigo, triarylcarbonium, quinophtalone, anthraquinone, dioxazine, phtalocyanine, quinacridone, quinacridone-quinone, indanthrone, pérylène, périnone, pyranthrone, dicétopyrrolopyrrole, isoviolanthrone et azométhine, au moins un agent tensioactif T, et de l'eau ;
(b) on met à disposition une miniémulsion de monomères, stabilisée par un composé organique hydrophobe qui présente une solubilité dans l'eau à 20°C d'au plus 5 x 10⁻⁵ g/l, d'au moins un monomère M polymérisable et d'au moins un agent tensioactif T dans l'eau ;
(c) on prépare une miniémulsion de monomères contenant des pigments en rassemblant la dispersion aqueuse pigmentaire de (a) et la miniémulsion de monomères de (b) et
(d) on polymérise la miniémulsion de monomères contenant des pigments de (c) en présence d'un initiateur de polymérisation et/ou par la chaleur, une encapsulation du pigment par le polymère qui se forme se produisant.

2. Procédé selon la revendication 1, **caractérisé en ce que**, dans l'étape (a), le pigment P est gâché ensemble avec l'agent tensioactif T dans de l'eau et dispersé à l'aide d'un appareil de broyage ou de dispersion.

3. Procédé selon la revendication 1 ou 2, **caractérisé en ce que**, dans l'étape (a), l'agent tensioactif T est utilisé en une quantité de 0,1 à 50% en poids, par rapport au poids total de la dispersion aqueuse de pigments.

4. Procédé selon l'une ou plusieurs des revendications 1 à 3, **caractérisé en ce que** l'agent tensioactif T est choisi dans le groupe des phosphates, des carboxylates, des éthoxylates polymères, des amines grasses, des éthoxylates d'amines grasses, des éthoxylates d'alcools gras, des sels d'acides gras, des alkylsulfonates, des alkylsulfates, des sels d'alkylammonium et des éthoxylates de sucre.

5. Procédé selon l'une ou plusieurs des revendications 1 à 4, **caractérisé en ce que**, dans l'étape (a), le pigment P est utilisé en une quantité de 0,1 à 50% en poids, par rapport au poids total de la dispersion aqueuse pigmentaire.

6. Procédé selon l'une ou plusieurs des revendications 1 à 5, **caractérisé en ce que**, dans l'étape (b), on délaye au moins un monomère M polymérisable dans une solution aqueuse d'un agent tensioactif T, on ajoute un composé organique hydrophobe qui présente une solubilité dans l'eau à 20°C d'au plus 5 x 10⁻⁵ et on homogénéise en une miniémulsion de monomères.

7. Procédé selon au moins l'une quelconque des revendications 1 à 6, **caractérisé en ce que** le monomère polymérisable M est un composé polymérisable par voie radicalaire du groupe formé par l'acide acrylique, les esters d'acryle, l'acrylonitrile, les acrylamides, l'acide méthacrylique, les esters de méthacryle, les alcools vinyliques, les vinyléthers, les vinylamines, l'acétate de vinyle, les esters de vinyle, les styrènes, les esters de l'acide maléique, l'anhydride de l'acide maléique et l'acide maléique.

8. Procédé selon au moins l'une quelconque des revendications 1 à 6, **caractérisé en ce que** le pigment est encapsulé par une enveloppe polymère, choisie dans le groupe des poly(acides hydroxycarboxyliques), des polyaminoacides, des polyamides, des polyesters, des polyimides, des polycarbonates, des aminoplastes, des phénoplastes, des polysulfures, des polyépoxydes et des résines d'urée.

9. Procédé selon au moins l'une quelconque des revendications 1 à 6, **caractérisé en ce que** le pigment est encapsulé par une enveloppe polymère choisie dans le groupe des polyuréthanes, des polyurées et des polyépoxydes.

10. Procédé selon au moins l'une quelconque des revendications 1 à 9, **caractérisé en ce que**, dans l'étape (b), le monomère M polymérisable est ajouté en une quantité de 0,1 à 80% en poids, par rapport au poids total l'émulsion.

11. Procédé selon au moins l'une quelconque des revendications 1 à 10, **caractérisé en ce que**, dans l'étape (b), l'agent tensioactif T est ajouté en une quantité de 0,1 à 50% en poids, par rapport au poids total des monomères M.

12. Procédé selon au moins l'une quelconque des revendications 1 à 11, **caractérisé en ce que**, dans l'étape (b), le composé organique hydrophobe est ajouté en une quantité de 1 à 50% en poids, par rapport au poids total des monomères M.

13. Procédé selon au moins l'une quelconque des revendications 1 à 12, **caractérisé en ce que**, dans l'étape (c), la dispersion aqueuse pigmentaire de (a) et la miniémulsion de monomères de (b) sont réunies dans un rapport pondéral de 5:95 à 95:5, par rapport au poids des monomères M et au poids du pigment P.

14. Procédé selon au moins l'une quelconque des revendications 1 à 12, **caractérisé en ce que** l'homogénéisation est réalisée sous l'effet d'ultrasons.

15. Particules pigmentaires encapsulées par une enveloppe polymère, le pigment étant un pigment organique P du groupe formé par les pigments azo, iso-indolinone, iso-indoline, anthanthrone, thio-indigo, thiazine-indigo, triarylcarbonium, quinophtalone, anthraquinone, dioxazine, phtalocyanine, quinacridone, quinacridone-quinone, indanthrone, pérylène, périnone, pyranthrone, dicétopyrrolopyrrole, isoviolanthrone et azométhine ;
les particules pigmentaires encapsulées par des polymères présentant une grosseur moyenne des particules di (moyenne d'intensité) entre 50 et 600 nm ;
la teneur en pigment des particules pigmentaires encapsulées par des polymères étant de 50 à 95% en poids ; et la teneur en particules d'homopolymère étant inférieure à 5% en poids par rapport au poids total des particules pigmentaires encapsulées.

16. Particules pigmentaires encapsulées selon la revendication 15, **caractérisées en ce que** la déviation des différentes particules les unes par rapport aux autres en ce qui concerne leur grosseur de particule est inférieure à 20%, et la déviation en ce qui concerne leur teneur en pigment est inférieure à 5%.

17. Particules pigmentaires encapsulées par une enveloppe polymère pouvant être obtenues selon un procédé selon l'une ou plusieurs des revendications 1 à 14, le pigment étant un pigment organique P du groupe formé par les pigments azo, iso-indolinone, iso-indoline, anthanthrone, thio-indigo, thiazine-indigo, triarylcarbonium, quinophtalone, anthraquinone, dioxazine, phtalocyanine, quinacridone, quinacridone-quinone, indanthrone, pérylène, périnone, pyranthrone, dicétopyrrolopyrrole, isoviolanthrone et azométhine ; les particules pigmentaires encapsulées par des polymères présentant une grosseur moyenne des particules di (moyenne d'intensité) entre 30 et 600 nm ;
la teneur en pigment des particules pigmentaires encapsulées par des polymères étant de 5 à 95% en poids ; et la teneur en particules d'homopolymère étant inférieure à 5% en poids par rapport au poids total des particules pigmentaires encapsulées.

18. Particules pigmentaires encapsulées selon la revendication 15, 16 ou 17, **caractérisées en ce que** les particules pigmentaires encapsulées par des polymères présentent une grosseur moyenne des particules di (moyenne d'intensité) entre 70 et 300 nm et la teneur en pigment des particules pigmentaires encapsulées par des polymères est de 75 à 85% en poids.

19. Utilisation des particules pigmentaires encapsulées selon la revendication 15, 16, 17 ou 18 pour la pigmentation de matériaux synthétiques, de résines, de laques, de peintures, d'encres d'imprimerie, de toners et de révélateurs électrophotographiques, de poudres et de laques en poudre, d'encres, de matériaux électroniques, d'encres pour jet d'encre et de filtres couleur.
